# EUROPEAN PATENT APPLICATION

(11) **EP 4 825 733 A1**
(43) Date of publication of application: **21.10.2026**
(21) Application number: 26170619.6
(22) Date of filing: 02.04.2026
(51) Int. Cl.: B64D 27/40, F02C 7/20

(54) **PROPULSION SYSTEM FOR AN AIRCRAFT COMPRISING AN ENGINE PYLON, A TURBINE ENGINE, AND MEANS FOR SECURING THE TURBINE ENGINE TO THE ENGINE PYLON**

(30) Priority: 17.04.2025 US 202563790519 P
(71) Applicant: Airbus Operations S.A.S., 31060 Toulouse (FR)
(72) Inventor: COMBES, Pierre-Antoine, 31060 TOULOUSE (FR); JOLIVET, Nicolas, 31060 TOULOUSE (FR); GRIMAL, Fabrice, 31060 TOULOUSE (FR); PAUTIS, Olivier, 31060 TOULOUSE (FR)
(74) Representative: Cabinet Le Guen Maillet

(57) **Abstract**

The invention relates to a propulsion system (100) comprising a fan casing (104a), an engine pylon (102) comprising a box (103) with a nose (102a) and a yoke (102b) fastened under the box (103) and extending on both sides of a vertical median plane (P), two shackles (116a-b) arranged on each side of the vertical median plane (P), each having a first end articulated to the nose (102a) and a second end articulated to a middle lug (118a-b) of the fan casing (104a) and a front shackle (110) being mounted articulated to the fan casing (104a) through a front connection point (110a) arranged in the vertical median plane (P), and to the yoke (102b) through two rear connection points (110b) arranged on each side of the vertical median plane (P).

With this arrangement, the mounting of the turbojet engine to the engine pylon is simplified.

## Description

### TECHNICAL FIELD

The present invention relates to a propulsion system for aircraft, wherein the propulsion system comprises a turbojet engine, an engine pylon and means for securing the turbojet engine to the engine pylon, as well as to an aircraft comprising such a propulsion system.

### PRIOR ART

An aircraft typically comprises a plurality of propulsion systems. Each propulsion system is generally attached under a wing of the aircraft and comprises an engine pylon attached under the wing, a turbojet engine and fastening means for securing the turbojet engine under the engine pylon.

Although current propulsion systems are satisfactory, the assembly and disassembly of the fastening means are generally time-consuming and complex, and it is desirable to find an arrangement that reduces installation time and complexity.

### DESCRIPTION OF THE INVENTION

One object of the present invention is to propose an aircraft propulsion system comprising a turbojet engine, an engine pylon and fastening means securing the turbojet engine to the engine pylon, the assembly/disassembly of which is facilitated.

To this end, a propulsion system for an aircraft is proposed, comprising:
- a turbojet engine having a fan casing extending along a longitudinal direction and having a vertical median plane,
- an engine pylon comprising a box with a nose at the front of the box and a yoke fastened under the box and extending on both sides of the vertical median plane,
- two lateral shackles arranged on each side of the vertical median plane, each having a first end articulated to the nose and a second end articulated to a middle lug of the fan casing, and
- a front shackle being mounted articulated:
   - to the fan casing through a front connection point arranged in the vertical median plane, and
   - to the yoke through two rear connection points arranged on each side of the vertical median plane.

With such an arrangement, the mounting of the turbojet engine to the engine pylon is simplified.

Advantageously, the front shackle takes the form of a triangle arranged in a plan globally horizontal, the triangle having two lateral beams and a base and each of the front connection points and of the two rear connection points is one of the vertices of the triangle.

Advantageously, the front shackle has an additional beam arranged between the two lateral beams and fastened between the front connection point and the base.

Advantageously, each shackle is arranged in a free space delimited by a lateral beam, the additional beam and the base.

Advantageously, the articulation of each of the front connection points and of the two rear connection points is a ball joint.

Advantageously, a pin of the front connection point is a doubled pin and the pins of the two rear connection points are simple pins.

Advantageously, the front shackle is further mounted articulated to the yoke through a central connection point arranged in the vertical median plane.

Advantageously, the central connection point is a waiting fail safe connection point. Advantageously, the articulation of each end of each shackle is a pivot joint.

Advantageously, the axes of the pivot joints are perpendicular to the vertical median plane.

The invention also proposes an aircraft comprising a propulsion system according to one of the preceding variants.

### BRIEF DESCRIPTION OF THE DRAWINGS

The features of the invention mentioned above, as well as others, will become clearer upon reading the following description of an exemplary embodiment, said description being made in relation to the attached drawings, in which:
Figure 1 is a side view of an aircraft according to the invention,
Figure 2 is a schematic representation in side view of a propulsion system according to the invention, and
Figure 3 is a perspective view of a front detail of the propulsion system according to the invention.

### DETAILED DESCRIPTION OF EMBODIMENTS

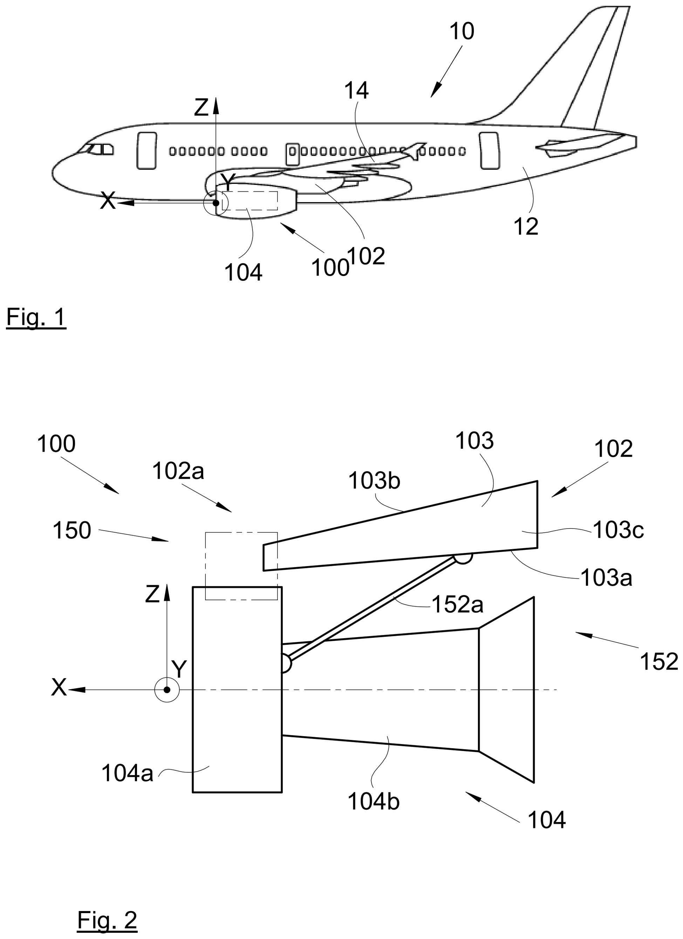

Fig. 1 shows an aircraft 10 that comprises a propulsion system 100 according to the invention. The aircraft 10 comprises, on both sides of a fuselage 12, a wing 14 to which an engine pylon 102 is attached. The propulsion system 100 comprises the engine pylon 102 and a turbojet engine 104 surrounded by a nacelle.

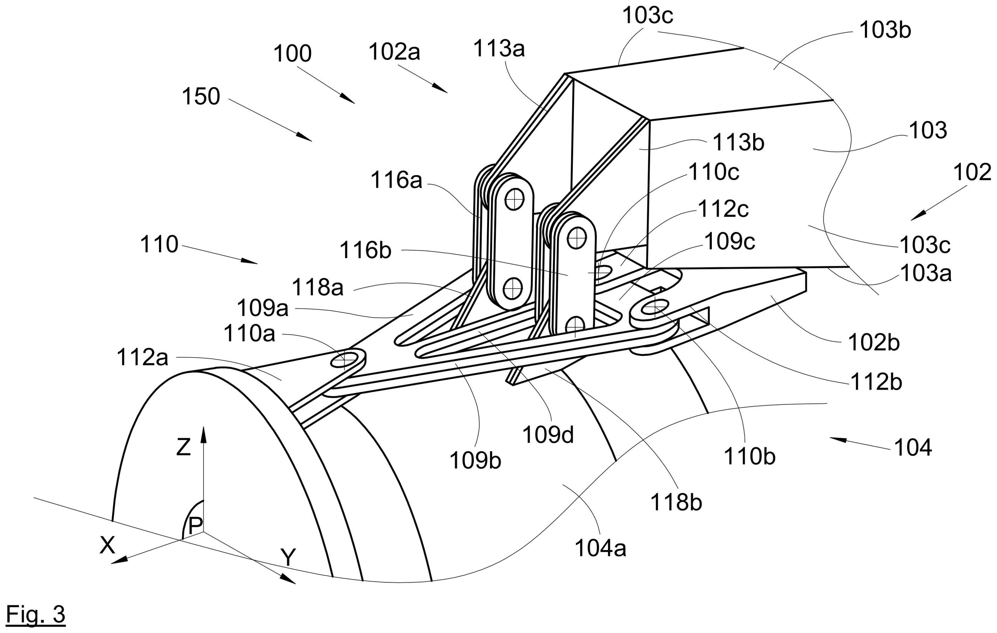

Fig. 2 shows a side view of the propulsion system 100 according to the invention and Fig. 3 shows a detail of the propulsion system 100.

High loads have to be transferred from the turbojet engine 104 to the wing 14. At this end, specific engine mounts are installed.

In the following description, terms relating to position are taken with reference to an aircraft in normal flight position, i.e. as shown in Figure 1, and the positions "front " and "rear" are taken in relation to the front and rear of the turbojet engine and in relation to the direction of travel F of the aircraft 10 when the turbojet engine 104 is operating.

In the following description, and by convention, X is the longitudinal direction of the turbojet engine 104, which is parallel to the longitudinal axis of the turbojet engine 104, Y is the transverse direction, which is horizontal when the aircraft is on the ground, and Z is the vertical direction, which is vertical when the aircraft is on the ground, these three directions X, Y and Z being orthogonal to each other.

The turbojet engine 102 has a shape of revolution about its longitudinal axis and comprises a fan casing 104a at the front and a rear casing 104b attached at the rear of the fan casing 104a. The fan casing 104a extends along the longitudinal direction X and has a vertical median plane P (XZ). The propulsion system 100 is generally symmetrical with respect to the vertical median plane P. The engine pylon 102 comprises a box 103 realized by assembly of a lower spar 103a, an upper spar 103b and two lateral walls 103c. At the front, the box 103 comprises a nose 102a which is a front rib (called N1) of the box 103.

The engine pylon 102 comprises also a yoke 102b which is rigidly fastened under the box 103, and more precisely below the lower spar 103a. The yoke 102b takes the form of a rigid plate attached under the box 103. The yoke 102b extends on both sides of the vertical median plane P and the yoke 102b has two ends which are beyond the lateral walls 103c of the box 103, it means that the yoke 102b is larger than the box 103.

The engine mounts comprise a front engine mount 150 and a rear engine mount 152.

The front engine mount 150 is shown in Fig. 3 and it is disposed above the fan casing 104a and it is installed between the nose 102a and the yoke 102b and the fan casing 104a.

Here, the rear engine mount 152 comprises two rear rods 152a arranged on each side of the vertical median plane P and each rear rod 152a is connected between the casing of the turbojet engine 104 and the engine pylon 102. More precisely, here, each rear rod 152a is connected between the rear of the fan casing 104a and the lower spar 103a.

The rear engine mount 152 can take other form and is not a part of the invention.

The front engine mount 150 comprises two shackles 116a-b which are arranged on each side of the vertical median plane P. Each shackle 116a-b has a first end articulated to the nose 102a and a second end articulated to a middle lug 118a-b of the fan casing 104a. Each shackle 116a-b is vertically oriented and is in a plane parallel to the vertical median plane P.

At the nose 102a, each shackle 116a-b is attached to a fitting 113a-b of the box 103 and here an extension of the lateral wall 103c of the box 103.

Here, each attachment of the shackles 116a-b takes the form of a clevis.

In the shackles 116a-b, the load inputs are aligned with the main webs of the structural partitions constituting the box 103: the vertical shackles 116a-b borned by the lateral panels are contained in a XZ-plane. Their projection is in a pure Z-direction (vertical) so that they ensure the balancing of the MX (Engine Torque).

The front engine mount 150 comprises also a front shackle 110 which is mounted articulated between the fan casing 104a and the yoke 102b. The front shackle 110 is articulated to the fan casing 104a through a front connection point 110a which is arranged in the vertical median plane P. The front shackle 110 is also articulated to the yoke 102b through two rear connection points 110b and these two rear connection points 110b are arranged on each side of the vertical median plane P.

The front connection point 110a is forward compared to the middle lug 118a-b and the middle lug 118a-b is forward compared to the rear connection points 110b.

At the front connection point 110a, the front shackle 110 is attached to the fan casing 104a thanks to a front lug 112a forming a female clevis for the front shackle 110 forming the male clevis. The pin of this clevis has an axis oriented vertically.

In the same way, at each of the rear connection points 110b, the front shackle 110 is attached to the yoke 102b thanks to a rear lug 112b forming a female clevis for the front shackle 110 forming the male clevis. The pin of this clevis has an axis oriented vertically. Other arrangements are possible. With this embodiment, the assembly is simpler.

In the embodiment represented on Fig. 3, the front shackle 110 takes the form of a triangle arranged in a plan globally horizontal. The triangle has two lateral beams 109a-b and a base 109c. The beams 109a-b and the base 109c are integral with each other. The front connection point 110a and the two rear connection points 110b are the three vertices of the triangle.

To reinforce the front shackle 110, it has an additional beam 109d arranged between the two lateral beams 109a-b and fastened between the front connection point 110a and the base 109c.

Here, each shackles 116a-b are arranged in a free space delimited by a lateral beam 109a-b, the additional beam 109d and the base 109c.

In a specific embodiment, the articulation of each end of each of the front connection point 110a and of the two rear connection points 110b is a ball joint.

Advantageously, for fail safe protection, the pin of the front connection point 110a is a doubled pin and the pins of the two rear connection points 110b are simple pin.

To reinforce the fixation of the front shackle 110 to the yoke 102b, in the current embodiment, the front shackle 110 is also mounted articulated to the yoke 102b through a central connection point 110c arranged in the vertical median plane P. The central connection point 110c is on the base 109c and between the two rear connection points 110b. At each of the central connection points 110c, the front shackle 110 is attached to the yoke 102b thanks to a central lug 112c forming a female clevis for the front shackle 110 forming the male clevis. The pin of this clevis has an axis oriented vertically. Other arrangements are possible.

The central connection point 110c is a waiting fail safe connection point. The articulation of the central connection point 110c is a pivot joint.

To realize the waiting fail safe connection, the diameter of the pin used in the clevis is smaller than the diameter of at least one of the holes where the pin is inserted. In normal conditions, the pin is not in contact with the clevis with the larger diameter and when one of the components is defective, the components move and the pin comes into contact with the two clevis including the one with the larger diameter and the gap would close which would engage that lug for transferring loads.

The articulation of each end of each shackle 116a-b is a pivot joint and the axes of the pivot joints are perpendicular to the vertical median plane P.

The axis of the shackles 116a-b goes through the lateral panels and the strong rib N1, thus loading both parts in shear and preventing the introduction of additional moments in the box 103.

In a specific embodiment, the front shackle 110 and the associated lugs and pins are doubled, the rear rods 152a and the associated lugs and pins are doubled, the shackles 116a-b and the associated lugs and pins are doubled. A doubled pin consists in an internal cylinder inserted in an external hollow cylinder.

## Claims

1. Propulsion system (100) for an aircraft (10) comprising:
- a turbojet engine (104) having a fan casing (104a) extending along a longitudinal direction (X) and having a vertical median plane (P),
- an engine pylon (102) comprising a box (103) with a nose (102a) at the front of the box (103) and a yoke (102b) fastened under the box (103) and extending on both sides of the vertical median plane (P),
- two lateral shackles (116a-b) arranged on each side of the vertical median plane (P), each having a first end articulated to the nose (102a) and a second end articulated to a middle lug (118a-b) of the fan casing (104a), and
- a front shackle (110) being mounted articulated:
- to the fan casing (104a) through a front connection point (110a) arranged in the vertical median plane (P), and
- to the yoke (102b) through two rear connection points (110b) arranged on each side of the vertical median plane (P).

2. Propulsion system (100) according to claim 1, **characterized in that** the front shackle (110) takes the form of a triangle arranged in a plan globally horizontal, the triangle having two lateral beams (109a-b) and a base (109c) and **in that** each of the front connection point (110a) and of the two rear connection point (110b) is one of the vertices of the triangle.

3. Propulsion system (100) according to claim 2, **characterized in that** the front shackle (110) has an additional beam (109d) arranged between the two lateral beams (109a-b) and fastened between the front connection point (110a) and the base (109c).

4. Propulsion system (100) according to claim 3, **characterized in that** each shackles (116a-b) are arranged in a free space delimited by a lateral beam (109a-b), the additional beam (109d) and the base (109c).

5. Propulsion system (100) according to any of the preceding claims, **characterized in that** the articulation of each of the front connection point (1 l0a) and of the two rear connection points (110b) is a ball joint.

6. Propulsion system (100) according to claim 5, **characterized in that** a pin of the front connection point (110a) is a doubled pin and **in that** the pins of the two rear connection points (110b) are simple pin.

7. Propulsion system (100) according to any of the preceding claims, **characterized in that** the front shackle (110) is further mounted articulated to the yoke (102b) through a central connection point (110c) arranged in the vertical median plane (P).

8. Propulsion system (100) according to claim 7, **characterized in that** the central connection point (110c) is a waiting fail safe connection point.

9. Propulsion system (100) according to any of the preceding claims, **characterized in that** the articulation of each end of each shackle (116a-b) is a pivot joint.

10. Propulsion system (100) according to claim 9, **characterized in that** the axes of the pivot joints are perpendicular to the vertical median plane (P).

11. Aircraft (10) comprising a propulsion system (100) according to one of the preceding claims.
